# EUROPÄISCHE PATENTANMELDUNG

(11) **EP 1 145 616 A1**
(43) Veröffentlichungstag der Anmeldung: **17.10.2001**
(21) Anmeldenummer: 01108843.2
(22) Anmeldetag: 09.04.2001
(51) Int. Cl.: A01D 43/08

(54) **Auswurfbeschleuniger für eine fahrbare Erntemaschine**

(30) Priorität: 15.04.2000 DE 10018825
(71) Anmelder: SAME DEUTZ-FAHR S.P.A., 24047 Treviglio (Bergamo) (IT)
(72) Erfinder: Nüsser, Martin, 89129 Langenau (DE)
(74) Vertreter: Quinterno, Giuseppe

(57) **Zusammenfassung**

Es wird ein Auswurfbeschleuniger (17) für eine fahrbare Erntemaschine, insbesondere für einen fahrbaren Feldhäcksler, vorgeschlagen, der in den Auswurfkanal (9) einschwenkbar ist, so dass nur wenn Bedarf an einem Auswurfbeschleuniger (17) besteht dieser eingeschwenkt und angetrieben wird. Dadurch ergeben sich Vorteile bezüglich Kraftstoffverbrauch, Verschleiß des Auswurfbeschleunigers (9) und der Geräuschentwicklung des Feldhäckslers.

## Beschreibung

Die Erfindung betrifft einen Auswurfbeschleuniger für eine fahrbare Erntemaschine, insbesondere für einen fahrbaren Feldhäcksler, mit einem Auswurfkanal und mit einem Auswurfbeschleuniger.

Feldhäcksler werden beispielsweise zum Herstellen von Silage aus Mais, Gras oder anderen Feldpflanzen eingesetzt. Die Feldpflanzen werden von einem Mähvorsatz geschnitten, in einem Vorpressaggregat gepresst und einer Häckslertrommel, welche eine Vielzahl umlaufender Messer aufweist, zerkleinert. Anschließend wird das Häckselgut in einen Auswurfkanal gefördert und gelangt durch den Auswurfkanal beispielsweise in einen hinter dem Feldhäcksler fahrenden Anhänger. Wegen der Länge und der Höhe des Auswurfkanals ist in der Regel in dem Auswurfkanal ein Auswurfbeschleuniger vorgesehen, welcher das Häckselgut beschleunigt und somit auch unter ungünstigen Erntebedingungen eine ausreichende Wurfweite des Häckselguts aus dem Auswurfkanal sichstellt. Nachteilig an den bekannten Auswurfbeschleunigern ist, dass sie permanent angetrieben werden, obwohl unter günstigen Erntebedingungen kein Auswurfbeschleuniger benötigt wird. In Folge des permanenten Antriebs sind Kraftstoffverbrauch und Geräuschentwicklung des Feldhäckslers sowie der Verschleiß des Auswurfbeschleunigers nach dem Stand der Technik größer als notwendig.

Der Erfindung liegt die Aufgabe zugrunde, einen Auswurfbeschleuniger bereitzustellen, der eine optimale Wurfweite des Häckselguts mit niedrigem Kraftstoffverbrauch, niedriger geräuschentwicklung und geringem Verschleiß verbindet.

Diese Aufgabe wird erfindungsgemäß gelöst durch einen Auswurfbeschleuniger für eine fahrbare Erntemaschine, insbesondere für einen fahrbaren Feldhäcksler, mit einem Auswurfkanal und mit einem Auswurfbeschleuniger, wobei der Auswurfbeschleuniger in den Auswurfkanal einschwenkbar ist, so dass bei Bedarf der Auswurfbeschleuniger in den Auswurfkanal eingeschwenkt werden kann und somit die gewünschte Wurfweite erreicht wird. In ausgeschwenktem Zustand wird der Auswurfbeschleuniger nicht angetrieben und unterliegt deswegen keinem Verschleiß und verursacht außerdem keinen Kraftstoffverbrauch und keine Geräusche.

In Ergänzung der Erfindung ist vorgesehen, dass der Auswurfbeschleuniger an einem Lenker angeordnet ist, so dass auf einfache Weise das Ein- und Ausschwenken des Auswurfbeschleunigers bewirkt werden kann.

Bei einer Variante der Erfindung ist vorgesehen, dass der Auswurfbeschleuniger anstelle einer ausgeschwenkten Quetschvorrichtung in den Auswurfkanal einschwenkbar ist, so dass sich eine besonders kompakte Bauweise ergibt und außerdem nur ein Antrieb, insbesondere ein Riemenantrieb, für den Auswurfbeschleuniger und die Quetschvorrichtung benötigt wird.

Bei weiteren Ausgestaltungen der Erfindung ist vorgesehen, dass in dem Auswurfkanal eine Öffnung für den Auswurfbeschleuniger vorgesehen ist und dass bei ausgeschwenktem Auswurfbeschleuniger die Öffnung des Auswurfkanals verschließbar ist, so dass die Strömungsbedingungen für das Häckselgut in allen Betriebszuständen optimal sind.

Weitere Ausführungsformen der Erfindung sehen vor, dass der Auswurfbeschleuniger als Schaufelrad ausgebildet ist und dass die Schaufeln des Schaufelrads gewendelt oder in Segmente unterteilt sind, die in Drehrichtung des Schaufelrads zueinander versetzt angeordnet sind, so dass der Auswurfbeschleuniger bewusst und einfach aufgebaut ist und durch die Wendelung bzw. die Segmentierung der Schaufeln sich eine kontinuierliche Beschleunigung des Häckselguts ergibt. Dadurch wird die Belastung des Antriebs des Auswurfbeschleunigers und die Geräuschentwicklung desselben verringert. Außerdem wird die Wurfweite verbessert.

In weiterer Ergänzung der Erfindung ist der Auswurfbeschleuniger riemengetrieben, so dass ein kostengünstiger und leistungsfähiger Antrieb des Auswurfbeschleunigers vorhanden ist.

Bei einer anderen Ergänzung der Erfindung sind der Auswurfbeschleuniger und/oder die Quetschvorrichtung mindestens in ihren Endschwenklagen verriegelbar, so dass es keine Kollisionen dieser Bauteile zueinander geben kann und ein sicherer Betrieb von Auswurfbeschleuniger und Quetschvorrichtung möglich ist.

Weitere Vorteile und vorteilhafte Ausgestaltungen der Erfindung sind der nachfolgenden Beschreibung, der Zeichnung und den Ansprüchen entnehmbar.

Ein Ausführungsbeispiel des Gegenstands der Erfindung ist in der Zeichnung dargestellt und im Folgenden näher beschrieben. Es zeigen:
- Fig. 1:: einen teilweise freigeschnittenen Feldhäcksler in der Seitenansicht;
- Fig. 2:: ein Ausführungsbeispiel eines erfindungsgemäßen Auswurfbeschleunigers; und
- Fig. 3:: eine Längs- und eine Seitenansicht eines als Schaufelrad ausgeführten Auswurfbeschleunigers.

Im Folgenden werden für gleiche Bauteile in den verschiedenen Figuren die gleichen Bezugszeichen verwandt und nicht nochmals erläutert. Es gilt das eine Figur betreffend Gesagte für die anderen Figuren, in denen gleiche Bezugszeichen auftreten, entsprechend.

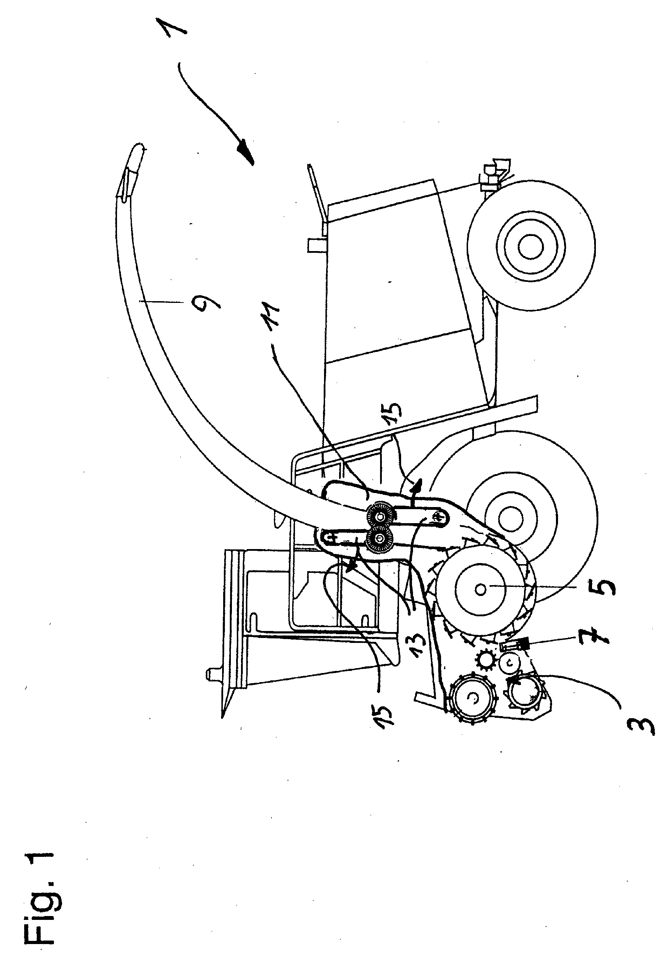

In Fig. 1 ist ein Feldhäcksler 1 in einer teilweise freigeschnittenen Seitenansicht ohne Vorsatzmähwerk dargestellt. Das ebenfalls nicht dargestellte Häckselgut wird in einem aus vier Walzen bestehenden Vorpressaggregat 3 gepresst und mit einer Häckslertrommel 5 an einer Gegenschneide 7 in kurze Stücke geschnitten. Danach gelangt das nicht dargestellte Häckselgut in einen Auswurfkanal 9. Im Auswurfkanal 9 befindet sich eine aus zwei angetriebenen Walzen bestehende Quetschvorrichtung 11. Die Walzen sind an Lenkern 13 befestigt und können, wenn die Quetschvorrichtung nicht benötigt wird, in Richtung der Pfeile 15 aus dem Auswurfkanal 9 ausgeschwenkt werden. In Fig. 1 ist kein Auswurfbeschleuniger dargstellt.

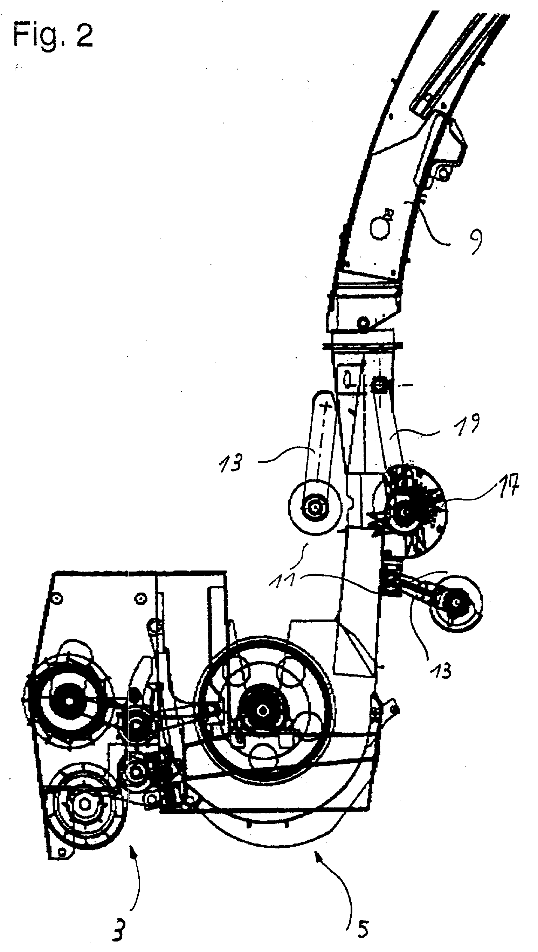

In Fig. 2 ist ein Auschnitt eines Feldhäckslers im Längsschnitt dargestellt. Die Walzen der Quetschvorrichtung 11 sind in Fig. 2 in ausgeschwenktem Zustand dargestellt. Anstelle der in Fig. 2 rechts des Auswurfkanals angeordneten Walze ist ein als Schaufelrad 17 ausgeführter Auswurfbeschleuniger in den Auswurfkanal 9 eingeschwenkt. Das Schaufelrad 17 ist an einem Lenker 19 angeordnet und kann somit einfach ein- oder ausgeschwenkt werden. Die Lenker 13 und 19 weisen in Fig. 2 nicht dargestellte Verriegelungseinrichtungen auf, mit denen die Quetschvorrichtung umd der Auswurfbeschleuniger zumindest in ihren Endschwenklagen verriegelt werden können.

Angetrieben werden sowohl die Walzen der Quetschvorrichtung 11 als auch das Schaufelrad 17 von einem in Fig. 2 nicht dargestellten Riemenantrieb. Wenn sowohl Quetschvorrichtung 11 als auch das Schaufelrad 17 ausgeschwenkt sind, können die Öffnungen des Auswurfkanals 9 durch in Fig. 2 ebenfalls nicht dargestellte Bleche verschlossen werden, so dass das Häckselgut nicht durch diese Öffnungen den Auswurfkanal 9 verlassen kann und außerdem kein Druckverlust und somit keine Verringerung der Wurfweite des Auswurfkanals 9 eintritt.

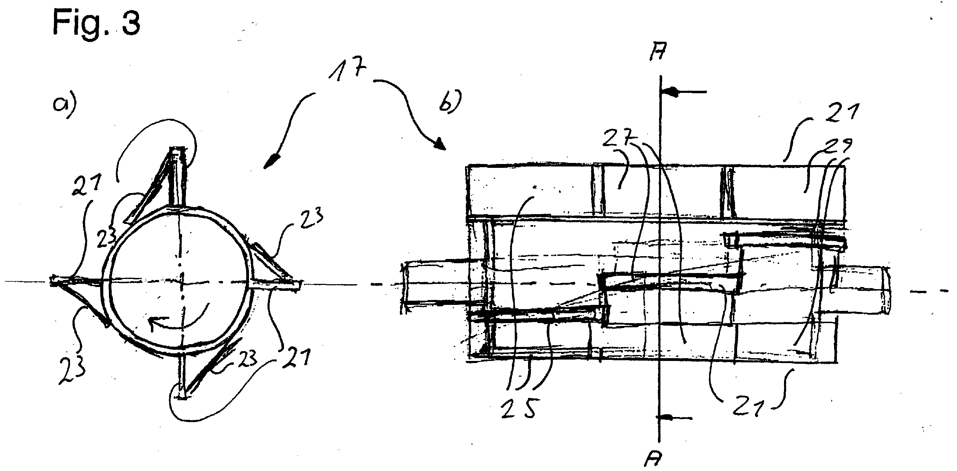

In Fig. 3 ist ein erfindungsgemäßes Schaufelrad 17 in einer Längsansicht und in einem Querschnitt entlang der Linie A-A dargestellt. Anhand des Querschnitts in der Fig. 3 a) lässt sich erkennen, dass das Schaufelrad 17 vier Schaufeln 21 aufweist. Um die Belastbarkeit der Schaufeln 21 zu erhöhen, sind diese durch Streben 23 abgestützt. In der Längsansicht gemäß Fig. 3 b) ist deutlich, dass die Schaufeln 21 in Segmente 25, 27 und 29 aufgeteilt sind. Diese Segmente 25, 27 und 29 sind in Drehrichtung des Schaufelrads 21 zueinander versetzt angeordnet, so dass sich die Förderleistung des Schaufelrads 21 verstetigt. Alternativ können die Schaufeln 21 auch als Wendel ausgeführt werden.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Auswurfbeschleuniger für eine fahrbare Erntemaschine, insbesondere für einen fahrbaren Feldhäcksler (1), mit einem Auswurfkanal (9) und mit einem Auswurfbeschleuniger (17), **dadurch gekennzeichnet, dass** der Auswurfbeschleuniger (17) in den Auswurfkanal (9) einschwenkbar ist.

2. Auswurfbeschleuniger nach Anspruch 1, **dadurch gekennzeichnet, dass** der Auswurfbeschleuniger (17) an einem Lenker (19) angeordnet ist.

3. Auswurfbeschleuniger nach Anspruch 1 oder 2, **dadurch gekennzeichnet, dass** der Auswurfbeschleuniger (17) anstelle einer ausgeschwenkten Quetschvorrichtung (11) in den Auswurfkanal (9) einschwenkbar ist.

4. Auswurfbeschleuniger nach einem der vorhergehenden Ansprüche, **dadurch gekennzeichnet, dass** in dem Auswurfkanal (9) eine Öffnung für den Auswurfbeschleuniger (17) vorgesehen ist.

5. Auswurfbeschleuniger nach Anspruch 4, **dadurch gekennzeichnet, dass** bei ausgeschwenktem Auswurfbeschleuniger (17) die Öffnung des Auswurfkanals (9) verschließbar ist.

6. Auswurfbeschleuniger nach einem der vorhergehenden Ansprüche, **dadurch gekennzeichnet, dass** der Auswurfbeschleuniger als Schaufelrad (17) ausgebildet ist.

7. Auswurfbeschleuniger nach Anspruch 6, **dadurch gekennzeichnet, dass** die Schaufeln (21) des Schaufelrads (17) gewendelt oder dass die Schaufeln (21) in Segmente (25, 27, 29) unterteilt sind, die in Drehrichtung des Schaufelrads (17) zueinander versetzt angeordnet sind.

8. Auswurfbeschleuniger nach einem der vorhergehenden Ansprüche, **dadurch gekennzeichnet, dass** der Auswurfbeschleuniger (17) riemengetrieben ist.

9. Auswurfbeschleuniger nach einem der vorhergehenden Ansprüche, **dadurch gekennzeichnet, dass** der Auswurfbeschleuniger (17) und/oder die Quetschvorrichtung (11) mindestens in ihren Endschwenklagen verriegelbar sind.
